# EUROPEAN PATENT APPLICATION

(11) **EP 4 776 109 A1**
(43) Date of publication of application: **15.07.2026**
(21) Application number: 24862032.0
(22) Date of filing: 05.09.2024
(51) Int. Cl.: G06F 3/0482, H04N 21/44

(54) **EDITING INTERACTION METHOD AND APPARATUS, AND COMPUTER-READABLE STORAGE MEDIUM**

(30) Priority: 07.09.2023 CN 202311154971
(71) Applicant: Lemon Inc., Grand Cayman, KY1-1205 (KY); Beijing Zitiao Network Technology Co., Ltd., Beijing 100190 (CN)
(72) Inventor: JIANG, Long, Beijing 100028 (CN); LU, Yang, Beijing 100028 (CN); DENG, Liuqing, Beijing 100028 (CN); GONG, Zijian, Beijing 100028 (CN); ZHONG, Amy Xin, Beijing 100028 (CN)
(74) Representative: Marks & Clerk LLP
(86) International application number: PCT/CN2024/117111
(87) International publication number: WO 2025/051193

(57) **Abstract**

The present disclosure relates to the technical field of terminals, and relates to an editing interaction method and apparatus, and a computer-readable storage medium. The editing interaction method comprises: displaying a layer menu on an editing interface of multimedia content, wherein the layer menu comprises an object entry corresponding to at least one piece of multimedia content; in response to a touch operation of a user in respect of a target object entry, displaying a sub-menu of the target object entry, wherein the sub-menu comprises an operation function; and when the touch operation comprises a drag operation and the target object entry is dragged to a trigger area for the operation function, in response to the user stopping the touch operation, executing the operation function on an object corresponding to the target object entry.

## Description

### CROSS-REFERENCE TO RELATED APPLICATIONS

The present application is based on and claims priority to Chinese Application No. 202311154971.7, filed on September 7, 2023, which is incorporated herein by reference in its entirety.

### TECHNICAL FIELD

The present disclosure relates to the technical field of terminals, and in particular to an editing interaction method and apparatus, and a computer-readable storage medium.

### BACKGROUND

Multimedia editing applications provide users with a channel to create multimedia content. By using editing tools provided in the applications, the users can add a variety of effects or stickers, pictures, and text media elements to such multimedia content as videos, images, and sounds. Therefore, the users can create richer multimedia content through mobile terminals.

### SUMMARY

According to a first aspect of some embodiments of the present disclosure, an editing interaction method is provided, the method including:
displaying a layer menu in an editing interface of multimedia content, where the layer menu includes at least one object entry corresponding to the multimedia content;
displaying a sub-menu for a target object entry in response to a touch operation of a user on the target object entry, where the sub-menu includes an operational function; and
performing the operational function on an object corresponding to the target object entry, in response to the touch operation including a drag operation, the target object entry being dragged to a trigger region of the operational function and the user stopping the touch operation.

In some embodiments, the editing interaction method further includes
closing the sub-menu in response to the user stopping the touch operation.

In some embodiments, the layer menu floats above the multimedia content, and a background of an untouched entry is semi-transparent.

In some embodiments, the background of the untouched entry has a transparency of less than 30%.

In some embodiments, a background of a touched entry has a higher transparency than a transparency of the untouched entry.

In some embodiments, the entry includes at least one of a single object entry or a combined object entry.

In some embodiments, the editing interaction method further includes:
displaying an indication for object combining in response to the target object entry being dragged to a location where a degree of overlapping between the target object entry and an untouched entry is greater than a threshold; and
combining the target object entry and the untouched entry into a combined object entry in response to the user stopping the touch operation.

In some embodiments, displaying the indication for object combining includes:
displaying the untouched entry with reduced transparency.

In some embodiments, the single object entry and the combined object entry are displayed in different ways.

In some embodiments, the editing interaction method further includes:
displaying a coverage range of the object corresponding to the target object entry in a first style, and displaying a coverage range of a plurality of objects corresponding to the combined object entry in a second style different from the first style in the multimedia content, in response to the target object entry being touched and the target object entry belonging to the combined object entry.

In some embodiments, the editing interaction method further includes:
adjusting a position of the target object entry to a position between two untouched entries in response to the target object entry being dragged to the position between the two untouched entries and the user stopping the touch operation.

In some embodiments, a position of the sub-menu remains unchanged in response to the user touching on the target object entry.

In some embodiments, the operational function includes at least one of Un-combine, Hide, Delete, or Edit.

According to a second aspect of some embodiments of the present disclosure, an editing interaction apparatus is provided. The apparatus includes: a memory; and a processor coupled to the memory, where the processor is configured to perform the editing interaction method in any one of the foregoing embodiments based on instructions stored in the memory.

According to a third aspect of some embodiments of the present disclosure, there is provided a computer-readable storage medium having a computer program stored thereon, where the program, when executed by a processor, causes the editing interaction method in any one of the foregoing embodiments to be implemented.

According to a fourth aspect of some embodiments of the present disclosure, there is provided a computer program. The computer program includes instructions that, when executed by a processor, cause the processor to perform the editing interaction method in any one of the foregoing embodiments.

From the following detailed description of exemplary embodiments of the present disclosure with reference to the accompanying drawings, other features and advantages of the present disclosure will become clear.

### BRIEF DESCRIPTION OF THE DRAWINGS

In order to more clearly describe the technical solutions in the embodiments of the present disclosure or in the related art, the accompanying drawings for describing the embodiments or the related art will be briefly described below. Apparently, the accompanying drawings in the description below show merely some embodiments in the present disclosure, and those of ordinary skill in the art may still derive other accompanying drawings from these accompanying drawings without creative efforts.
FIG. 1A to FIG. 1E are schematic diagrams of an editing interface according to some embodiments of the present disclosure;
FIG. 2 is a schematic flowchart of an editing interaction method according to some embodiments of the present disclosure;
FIG. 3 is a schematic flowchart of an editing interaction method according to some other embodiments of the present disclosure;
FIG. 4 is a schematic structural diagram of an editing interaction apparatus according to some embodiments of the present disclosure;
FIG. 5 is a schematic structural diagram of an editing interaction apparatus according to some other embodiments of the present disclosure; and
FIG. 6 is a schematic structural diagram of an editing interaction apparatus according to still other embodiments of the present disclosure.

### DETAILED DESCRIPTION

The technical solutions in the embodiments of the present disclosure are clearly and completely described below with reference to the accompanying drawings of the embodiments of the present disclosure. However, apparently, the embodiments described are merely some embodiments of the present disclosure rather than all the embodiments. The following description of at least one exemplary embodiment is actually illustrative only, and in no way serves as any limitation to the present disclosure and application or use thereof. All other embodiments obtained by those of ordinary skill in the art based on the embodiments of the present disclosure without any creative effort shall fall within the scope of protection of the present disclosure.

Unless specifically stated otherwise, the relative arrangement of components and steps, numerical expressions, and numerical values set forth in these embodiments do not limit the scope of the present disclosure.

Also, it should be understood that, for ease of description, the sizes of various parts shown in the drawings are not drawn to actual scale.

Technologies, methods, and devices known to those skilled in the art may not be discussed in detail, but where appropriate, such technologies, methods, and devices should be considered as part of the specification.

In all examples shown and discussed here, any specific value should be interpreted as merely illustrative and not as limitations. Therefore, there may be different values in other examples of an exemplary embodiment.

It should be noted that similar reference signs and letters refer to similar items in the following accompanying drawings. Therefore, once a specific item is defined in one of the accompanying drawings, it need not be further discussed in subsequent accompanying drawings.

Due to the limitation of the size and interaction mode of mobile terminals, it is cumbersome for users to operate when editing multimedia content, resulting in relatively low editing efficiency.

One technical problem to be solved in the embodiments of the present disclosure is how to improve the convenience of the user's operation in an editing process in order to improve the editing efficiency.

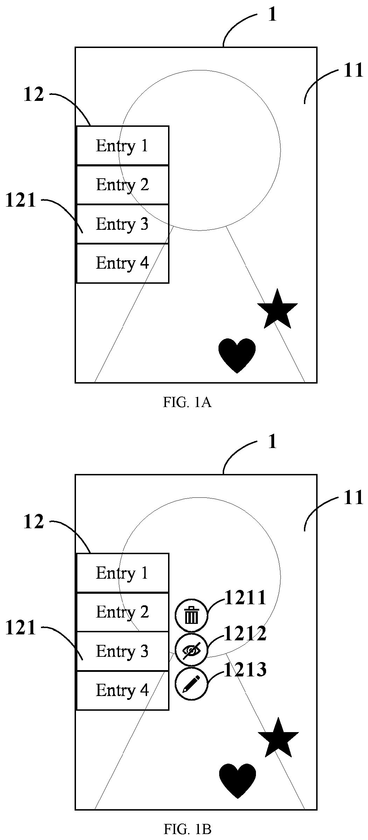

In the embodiments of the present disclosure, the display of an editing interface in different situations is described by way of example in FIG. 1A to FIG. 1E, some or all of which may be selected by those skilled in the art as needed.

FIG. 1A is a schematic diagram of an editing interface according to some embodiments of the present disclosure. As shown in FIG. 1A, an editing interface 1 in this embodiment includes multimedia content 11 and a layer menu 12. If necessary, the editing interface 1 may further include other content. This will not be detailed herein.

The multimedia content 11 is, for example, a video or an image, and editing of the multimedia content may be implemented by adding objects to the multimedia content. The objects may include effects such as transition effects, color adjustment effects, and zoom effects, and also media elements added to multimedia, such as sticker media elements and text media elements. It is also possible for those skilled in the art to use other types of objects, which will not be detailed herein. During editing of the multimedia content, in order to facilitate separate processing of each object or a combination of objects, one or more objects that have been added to the multimedia content may occupy a layer until the editing is finished. Such a layer may be referred to as an object layer, or more specifically as an effect layer or a media element layer. The plurality of object layers and a layer in which the multimedia content is located (referred to as a multimedia content layer) are arranged in a direction perpendicular to a screen. When the editing operation is finished and an edited video is rendered and generated, an occlusion relationship between the multimedia content and each object may be determined according to the order in which the multimedia content layer and the individual object layers are arranged, and a rendering result may be generated based on the occlusion relationship.

The layer menu 12 includes one or more entries 121, such as entries 1 to 4 in FIG. 1A. Each entry corresponds to one or more objects that have been added to the multimedia content. For example, the entry may be a single object entry, corresponding to one object. For another example, the entry may be a combined object entry, corresponding to a plurality of objects combined into the same group. Operating each entry in the layer menu can implement the operation on the object(s) corresponding to each entry, such as Un-combine, Hide, Delete, Edit, and other operational functions.

In some embodiments, the layer menu 12 floats above the multimedia content 11, and the background of the entry in the layer menu 12 is semi-transparent in a default state (e.g., when a user does not make a touch or other operations on the entry). Semi-transparent is a state between transparent and non-transparent. Therefore, floating the layer menu 12 above the multimedia content 11 can maximize the display range of the multimedia content to facilitate previewing by the user, and the semi-transparent setting allows the user to identify the layer menu while minimizing the impact on the preview of editing results of the multimedia content. In some embodiments, the background of an entry in a default state (such as an untouched entry) has a transparency of less than 30%, in order to maximize the visibility of the multimedia content and improve a preview effect of the editing. If necessary, the layer menu 12 may also be displayed in other ways, which will not be detailed in the present disclosure.

When the user triggers an entry, a sub-menu corresponding to the entry may be displayed. If the layer menu is considered as a primary menu, the sub-menu may be considered as a secondary menu. The sub-menu includes one or more operational functions. For example, when the user triggers an entry 3 in FIG. 1A, the editing interface may be as shown in FIG. 1B. In FIG. 1B, the sub-menu for the entry 3 includes three operational functions, which are respectively Delete 1211, Hide 1212, and Edit 1213. The operational functions in the sub-menu of FIG. 1B and the arrangement order of the operational functions are merely exemplary, and those skilled in the art may make a choice as needed. Individual entries in the layer menu 12 may correspond to the same sub-menu, or entries of the same type in the layer menu 12 may correspond to the same sub-menu. After the sub-menu is triggered, the user may indicate, through a further operation, which functional operation is to be performed on the object corresponding to the triggered entry.

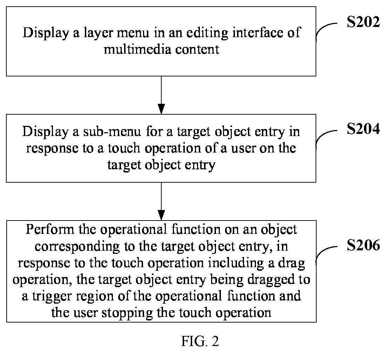

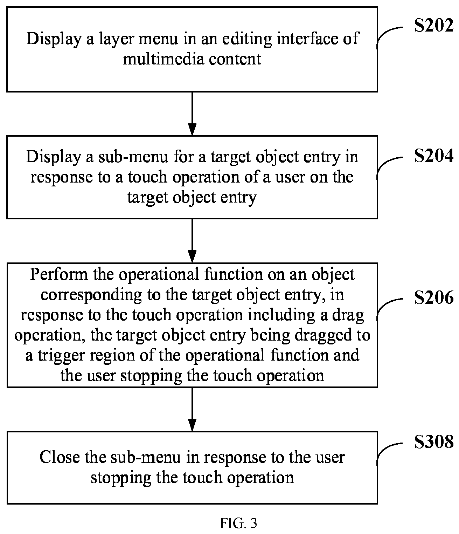

In the related art, an entry in a menu is usually triggered by a tap operation. The tap operation is a process in which the user makes a touch and then stops the touch. For example, after it is detected that the user has made a touch on an entry, when it is also detected that the user stops the touch (e.g., the user lifts the finger), the entry is considered to be triggered, and a sub-menu for the entry may then be displayed. However, after the sub-menu is displayed, the user also needs to perform a further operation to perform the functions in the sub-menu, such as by further tapping an item in the sub-menu. In this way, when the user needs to perform a functional operation on an object, they need to tap the screen repeatedly, which makes the operation process cumbersome and easily leads to an accidental touch. In order to improve the convenience of the user's operation to improve the editing efficiency, the interaction process is optimized in the embodiments of the present disclosure. Embodiments of an editing interaction method according to the present disclosure are described below with reference to FIG. 2 and FIG. 3. In these embodiments, the editing interaction method is performed, for example, by a mobile terminal such as a mobile phone, a tablet computer or a wearable device, and a device for performing the editing interaction method includes an input interface and a display. The user provides an input to the device, for example, by touching the screen with a touch tool such as a finger or a stylus.

FIG. 2 is a schematic flowchart of an editing interaction method according to some embodiments of the present disclosure. As shown in FIG. 2, the editing interaction method in this embodiment includes steps S202 to S206.

In step S202, a layer menu is displayed in an editing interface of multimedia content, where the layer menu includes at least one object entry corresponding to the multimedia content.

In step S204, a sub-menu for a target object entry is displayed in response to a touch operation of a user on the target object entry, where the sub-menu includes an operational function. That is, the sub-menu for the target object entry is always displayed during the user's touch on the target object entry. The target object entry is an entry on which the user operates. Therefore, there is no need to wait until the user stops the touch before displaying the sub-menu, making the response speed faster.

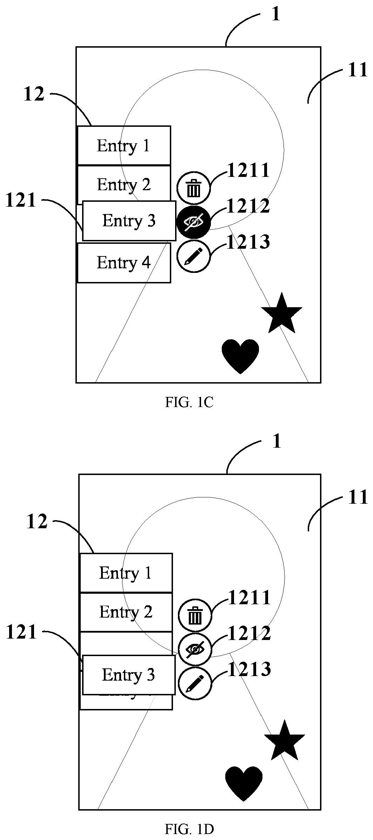

In some embodiments, the layer menu floats above the multimedia content, and the background of the untouched entry is semi-transparent. A background of a touched entry has a higher transparency than a transparency of the untouched entry, for example, the background of the touched entry is non-transparent. This can improve the previewability of the multimedia content while highlighting the touched entry. For example, in FIG. 1A, untouched entries, namely, an entry 1 to an entry 4, are all semi-transparent. In FIG. 1B and FIG. 1C, the touched entry 3 is non-transparent, and the untouched entry 1, the untouched entry 2, and the untouched entry 4 are semi-transparent. In the multimedia content, the portion covered by the untouched entries can still be displayed through these entries.

In some embodiments, in response to the user touching the target object entry, the position of the sub-menu remains unchanged, that is, the position of the sub-menu does not change with the position of the target object entry. For example, when the entry 3 in FIG. 1B is dragged by the user to a position near the entry 1, the sub-menu for the entry 3 may remain in the position shown in FIG. 1B, thereby minimizing changes in the editing interface, reducing interference with the user during operation and facilitating the user in accurately dragging the target object entry to a trigger region of the operational function at any time during the user's touch on the target object entry.

In step S206, the operational function is performed on an object corresponding to the target object entry, in response to the touch operation including a drag operation, the target object entry being dragged to a trigger region of the operational function and the user stopping the touch operation.

The drag operation is an operation in which the user makes a touch on a target object entry and then moves their finger (or another touch tool) such that the touched target object entry follows the finger. During dragging, the user keeps the touch on the target object entry, and therefore, the sub-menu for the target object entry keeps being displayed during the process of the user dragging the target object entry. The touch operation including the drag operation may mean the touch operation being the drag operation per se, or may mean that the user maintains the touch on the target object entry without moving the finger before/after performing the drag operation.

For example, still with reference to FIG. 1A and FIG. 1B, when the user makes a touch on the entry 3 in the editing interface of FIG. 1A and maintains the touch operation, the sub-menu is triggered, as shown in the editing interface of FIG. 1B. While the user maintains the touch operation, the sub-menu keeps being displayed regardless of whether the entry 3 is dragged.

When the user drags the entry 3 in FIG. 1B to the position as shown in FIG. 1C, for example, when the distance between the entry 3 and Hide 1212 is less than a distance threshold, it is determined that the entry 3 is dragged to the trigger region of Hide 1212. While the entry 3 is dragged to the trigger region of Hide 1212, an object corresponding to the entry 3 is hidden when the user stops the touch operation, such as when the user releases the finger. In some embodiments, when the target object entry is dragged to the trigger region of the operational function, the operational function may be highlighted to indicate to the user the operational function to be triggered. If the user keeps maintaining the touch operation and drags the target object entry to a location outside the trigger region of the operational function, and then stops the touch operation at this location, the operational function is not performed.

The above-mentioned embodiment allows the user to complete the display and execution of the operational function through one touch operation, making the operation process simple and smooth, and improving the convenience of the user's operation in an editing process. Moreover, the simplified operation reduces the probability of accidental touches of the user. Therefore, the overall editing efficiency can be improved. In particular, in the case of one-handed operation by the user holding a mobile terminal such as a mobile phone, the user's operation efficiency can be improved to a greater extent.

To further simplify the user's operation, some embodiments of the present disclosure make it also possible to automatically close the sub-menu after the user finishes the touch operation. FIG. 3 is a schematic flowchart of an example of an editing interaction method according to some other embodiments of the present disclosure. As shown in FIG. 3, in addition to steps S202 to S206, the editing interaction method in this embodiment further includes step S308: closing the sub-menu in response to the user stopping the touch operation.

In some embodiments, in response to the target object entry being dragged to the trigger region of the operational function, the operational function is performed on the object corresponding to the target object entry and the sub-menu is closed in response to the user stopping the touch operation. For example, in FIG. 1C, when the entry 3 is dragged to the trigger region of Hide 1212, the object corresponding to the entry 3 is hidden and the sub-menu is closed in response to the user stopping the touch on the entry 3. At this time, the editing interface 1 may be as shown in FIG. 1A. The process for operational functions such as Delete 1211 and Edit 1213 is similar, and will not be detailed herein. This embodiment allows the user to complete the display and execution of the operational function through one touch operation, and allows the sub-menu to be automatically closed after the touch operation is finished, such that the user can further perform other operations on the target object entry or perform operations on other object entries, making the operation process simple and smooth, and improving the convenience of the user's operation in an editing process.

However, step S308 is not limited to being performed only when the operational function is triggered. It is also possible to close the sub-menu in response to the user stopping the touch operation in the case where the target object entry is outside the trigger region of the operational function. For example, in the editing interface of FIG. 1A, the user is not intended to operate the entry 3, but accidentally touches the entry 3, making the editing interface appear as shown in FIG. 1B. When the user realizes their accidental touch on the entry 3 and stops the touch operation, the sub-menu is closed, and the editing interface returns to the state of FIG. 1A. In other words, after the user stops the accidental touch operation, the editing interface can be restored without additional operations, which can further improve the convenience of the user's operation in the editing process of the multimedia content.

In the embodiments of the present disclosure, the drag operation can be used to trigger combining of objects or ordering of object layers in addition to triggering the operational function. The two application scenarios are described below, by way of example, with reference to some embodiments.

In some embodiments, the entry in the layer menu includes at least one of a single object entry or a combined object entry. In the layer menu, the single object entry and the combined object entry may be displayed in different ways. For example, the combined object entry may be provided with an additional identifier to indicate its type. Through a specific trigger operation, entries associated with the combined object entry, i.e., entries corresponding to objects in an object combination, may be further displayed in the layer menu.

The user may implement the combining of the entries through the drag operation. The combined objects may be two single object entries, or a single object entry and a combined object entry, or two combined object entries. In some embodiments, in a case where the target object entry is dragged to a location where a degree of overlapping between the target object entry and the untouched entry is greater than a threshold: an indication for object combining is displayed, and the target object entry and the untouched entry are combined into a combined object entry in response to the user stopping the touch operation. For example, displaying the indication for object combining includes displaying the untouched entry with reduced transparency. If necessary, it is also possible to give the indication in other ways, such as by changing the color of the untouched entry.

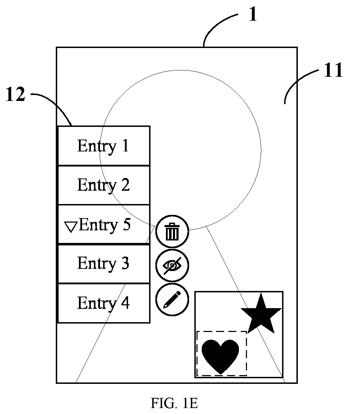

FIG. 1D is a schematic diagram of an example of an editing interface according to yet other embodiments of the present disclosure. As shown in FIG. 1D, when the entry 3 is dragged to a position at which a degree of overlapping between this entry and the entry 4 is greater than a threshold, the entry 4 has reduced the transparency or has changed the color. In this case, if the user stops the touch operation, the entry 3 and the entry 4 are combined into a combined object entry, such as a newly generated combined object entry 5, as shown in FIG. 1E. For example, in FIG. 1A, the entry 3 corresponds to a heart-shaped sticker media element in the multimedia content, and the entry 4 corresponds to a star-shaped sticker media element in the multimedia content. After the entries 3 and 4 are combined to generate the entry 5, both the heart-shaped sticker media element and the star-shaped sticker media element may be operated by operating the entry 5.

In the multimedia content, a group and members in the group may be displayed in different ways. In some embodiments, a coverage range of the object corresponding to the target object entry is displayed in a first style, and a coverage range of a plurality of objects corresponding to the combined object entry is displayed in a second style different from the first style in the multimedia content, in response to the target object entry being touched and the target object entry belonging to the combined object entry. For example, in FIG. 1E, the combined object entry 5 includes the entry 3 and the entry 4. When the entry 3 is touched by the user, the heart-shaped sticker media element corresponding to the entry 3 is framed by a dashed line box, and a combination of the heart-shaped sticker media element and the star-shaped sticker media element that correspond to the combined object entry 5 is framed by a solid line box. This allows the user to clearly learn of the relationship between an added object and the combined objects to which it belongs during a preview process of the multimedia content, thereby improving the user's editing efficiency.

An embodiment in which the position of an object is adjusted through a drag operation is described below by way of example. In some embodiments, a position of the target object entry is adjusted to a position between two untouched entries in response to the target object entry being dragged to the position between the two untouched entries and the user stopping the touch operation. For example, in FIG. 1B, when the entry 3 is dragged to the position between the entry 1 and the entry 2, in response to the user stopping the touch operation, the position of the entry 3 in the layer menu is reset to a position between the entry 1 and the entry 2, i.e., in an order of entry 1, entry 3, entry 2, and entry 4 from top to bottom. Accordingly, the arrangement order of the entries can be changed through the drag operation, and the positional relationship between the individual object layers can be adjusted to achieve a target rendering effect according to user needs.

In the process of implementing entry combining or entry position adjustment through dragging, the sub-menu remains displayed while the user maintains the touch on the target object entry.

With the embodiments described above, the user can complete at least one of the functional operation on the object, combining of the entries, and adjustment of the arrangement order of the entries in the layer menu through the drag operation. Moreover, even after the dragging operation has been initiated, the user can change the type of the operation that they want to complete at their will by changing the position at which the touch operation is finished, thus providing a high degree of flexibility.

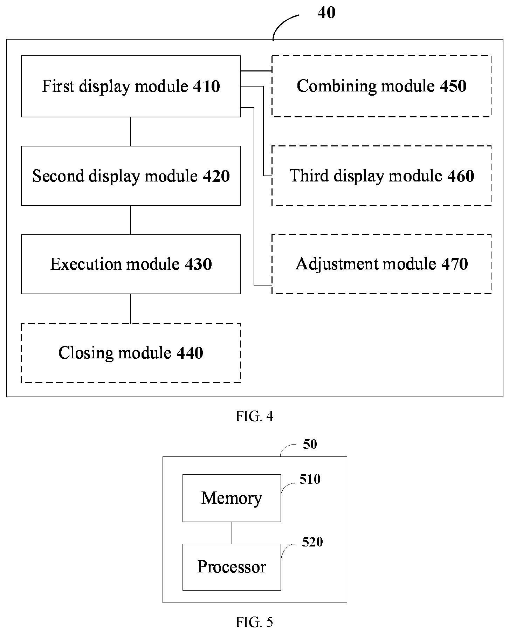

Embodiments of an editing interaction apparatus according to the present disclosure are described below with reference to FIG. 4 to FIG. 6.

FIG. 4 is a schematic structural diagram of an editing interaction apparatus according to some embodiments of the present disclosure. As shown in FIG. 4, the editing interaction apparatus 40 in this embodiment includes:
a first display module 410 configured to display a layer menu in an editing interface of multimedia content, where the layer menu includes at least one object entry corresponding to the multimedia content;
a second display module 420 configured to display a sub-menu for a target object entry in response to a touch operation of a user on the target object entry, where the sub-menu includes an operational function; and
an execution module 430 configured to perform the operational function on an object corresponding to the target object entry, in response to the touch operation comprising a drag operation, the target object entry being dragged to a trigger region of the operational function and the user stopping the touch operation.

The above-mentioned embodiment allows the user to complete the display and execution of the operational function through one touch operation, making the operation process simple and smooth, and improving the convenience of the user's operation in an editing process. Moreover, the simplified operation reduces the probability of accidental touches of the user. Therefore, the overall editing efficiency can be improved. In particular, in the case of one-handed operation by the user holding a mobile terminal such as a mobile phone, the user's operation efficiency can be improved to a greater extent.

In some embodiments, the editing interaction apparatus 40 further includes
a closing module 440 configured to close the sub-menu in response to the user stopping the touch operation.

In some embodiments, the layer menu floats above the multimedia content, and a background of an untouched entry is semi-transparent.

In some embodiments, the background of the untouched entry has a transparency of less than 30%.

In some embodiments, a background of a touched entry has a higher transparency than a transparency of the untouched entry.

In some embodiments, the entry includes at least one of a single object entry or a combined object entry.

In some embodiments, the editing interaction apparatus 40 further includes a combining module 450 configured to:
display an indication for object combining in response to the target object entry being dragged to a location where a degree of overlapping between the target object entry and an untouched entry is greater than a threshold; and
combine the target object entry and the untouched entry into a combined object entry in response to the user stopping the touch operation.

In some embodiments, the combining module 450 is further configured to display the untouched entry with reduced transparency.

In some embodiments, the single object entry and the combined object entry are displayed in different ways.

In some embodiments, the editing interaction apparatus 40 further includes
a third display module 460 configured to display a coverage range of the object corresponding to the target object entry in a first style and display a coverage range of a plurality of objects corresponding to the combined object entry in a second style different from the first style in the multimedia content, in response to the target object entry being touched and the target object entry belonging to the combined object entry.

In some embodiments, the editing interaction apparatus 40 further includes
an adjustment module 470 configured to adjust a position of the target object entry to a position between two untouched entries in response to the target object entry being dragged to the position between the two untouched entries and the user stopping the touch operation.

In some embodiments, a position of the sub-menu remains unchanged in response to the user touching the target object entry.

In some embodiments, the operational function includes at least one of Un-combine, Hide, Delete, or Edit.

FIG. 5 is a schematic structural diagram of an editing interaction apparatus according to some other embodiments of the present disclosure. As shown in FIG. 5, the editing interaction apparatus 50 in this embodiment includes: a memory 510 and a processor 520 coupled to the memory 510, where the processor 520 is configured to perform the editing interaction method in any one of the foregoing embodiments based on instructions stored in the memory 510.

The memory 510 may include, for example, a system memory, a fixed non-volatile storage medium, etc. The system memory has, for example, an operating system, an application, a boot loader, and other programs stored therein.

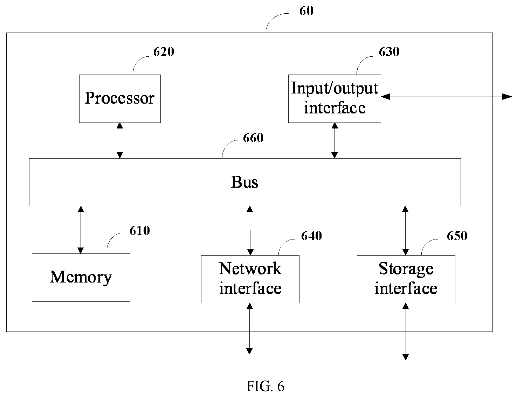

FIG. 6 is a schematic structural diagram of an editing interaction apparatus according to still other embodiments of the present disclosure. As shown in FIG. 6, the editing interaction apparatus 60 in this embodiment includes: a memory 610 and a processor 620. The editing interaction apparatus may further include an input/output interface 630, a network interface 640, a storage interface 650, etc. These interfaces 630, 640, and 650, and the memory 610 and the processor 620 may be connected to each other via a bus 660, for example. The input/output interface 630 provides a connection interface for an input/output device such as a display, a mouse, a keyboard and a touch screen. The network interface 640 provides a connection interface for various networking devices. The storage interface 650 provides a connection interface for an external storage device such as an SD card and a USB flash drive.

An embodiment of the present disclosure further provides a computer-readable storage medium having a computer program stored thereon, where the program, when executed by a processor, causes the editing interaction method in any one of the foregoing embodiments to be implemented.

It should be understood by those skilled in the art that the embodiments of the present disclosure can be provided as a method, a system, or a computer program product. Accordingly, the present disclosure may take a form of an entirely hardware embodiment, an entirely software embodiment, or an embodiment combining software and hardware aspects. Furthermore, the present disclosure may take the form of a computer program product that is implemented on one or more computer-usable non-transitory storage media (including, but not limited to, a disk memory, a CD-ROM, an optical memory, etc.) that include computer-usable program code.

The present disclosure is described with reference to the flowcharts and/or the block diagrams of the method, the device (system), and the computer program product according to the embodiments of the present disclosure. It should be understood that each procedure and/or block in the flowcharts and/or block diagrams, and a combination of procedures and/or blocks in the flowcharts and/or block diagrams may be implemented by computer program instructions. These computer program instructions may be provided to a processor of a general-purpose computer, a special-purpose computer, an embedded processor or other programmable data processing devices to create a machine, such that the instructions executed by the processor of the computer or other programmable data processing devices create means for implementing functions specified in one or more procedures in the flowcharts and/or one or more blocks in the block diagrams.

These computer program instructions may also be stored in a computer-readable memory that may direct the computer or other programmable data processing devices to operate in a specific manner, such that the instructions stored in the computer-readable memory create an article of manufacture including instruction means, and the instruction means implements the functions specified in one or more procedures in the flowcharts and/or one or more blocks in the block diagrams.

These computer program instructions may also be loaded onto the computer or other programmable data processing devices, such that a series of operation steps are executed on the computer or other programmable devices to perform computer-implemented processing, and thus the instructions executed on the computer or other programmable devices provide steps for implementing the functions specified in one or more procedures in the flowcharts and/or one or more blocks in the block diagrams.

The above description is merely illustrative of the preferred embodiments of the present disclosure and is not intended to limit the present disclosure. Any modifications, equivalent substitutions, improvements, etc. made within the spirit and principles of the present disclosure shall fall within the scope of protection of the present disclosure.

## Claims

1. An editing interaction method, comprising:
displaying a layer menu in an editing interface of multimedia content, wherein the layer menu comprises at least one object entry corresponding to the multimedia content;
displaying a sub-menu for a target object entry in response to a touch operation of a user on the target object entry, wherein the sub-menu comprises an operational function; and
performing the operational function on an object corresponding to the target object entry, in response to the touch operation comprising a drag operation, the target object entry being dragged to a trigger region of the operational function and the user stopping the touch operation.

2. The editing interaction method according to claim 1, further comprising:
closing the sub-menu in response to the user stopping the touch operation.

3. The editing interaction method according to claim 1 or 2, wherein the layer menu floats above the multimedia content, and a background of an untouched entry is semi-transparent.

4. The editing interaction method according to claim 3, wherein the background of the untouched entry has a transparency of less than 30%.

5. The editing interaction method according to claim 3 or 4, wherein a background of a touched entry has a higher transparency than a transparency of the untouched entry.

6. The editing interaction method according to any one of claims 1 to 5, wherein the entry comprises at least one of a single object entry or a combined object entry.

7. The editing interaction method according to claim 6, further comprising:
displaying an indication for object combining in response to the target object entry being dragged to a location where a degree of overlapping between the target object entry and an untouched entry is greater than a threshold; and
combining the target object entry and the untouched entry into a combined object entry in response to the user stopping the touch operation.

8. The editing interaction method according to claim 7, wherein displaying the indication for object combining comprises:
displaying the untouched entry with reduced transparency.

9. The editing interaction method according to any one of claims 6 to 8, wherein the single object entry and the combined object entry are displayed in different ways.

10. The editing interaction method according to any one of claims 6 to 9, further comprising:
displaying a coverage range of the object corresponding to the target object entry in a first style and displaying a coverage range of a plurality of objects corresponding to the combined object entry in a second style different from the first style in the multimedia content, in response to the target object entry being touched and the target object entry belonging to the combined object entry.

11. The editing interaction method according to any one of claims 1 to 10, further comprising:
adjusting a position of the target object entry to a position between two untouched entries in response to the target object entry being dragged to the position between the two untouched entries and the user stopping the touch operation.

12. The editing interaction method according to any one of claims 1 to 11, wherein a position of the sub-menu remains unchanged in response to the user touching the target object entry.

13. The editing interaction method according to any one of claims 1 to 12, wherein the operational function comprises at least one of Un-combine, Hide, Delete, or Edit.

14. An editing interaction apparatus, comprising:
a memory; and
a processor coupled to the memory, wherein the processor is configured to perform the editing interaction method according to any one of claims 1 to 13 based on instructions stored in the memory.

15. A computer-readable storage medium having a computer program stored thereon, wherein the program, when executed by a processor, causes the editing interaction method according to any one of claims 1 to 13 to be implemented.

16. A computer program, comprising
instructions that, when executed by a processor, cause the processor to perform the editing interaction method according to any one of claims 1 to 13.
